# EUROPEAN PATENT APPLICATION

(11) **EP 3 840 172 A1**
(43) Date of publication of application: **23.06.2021**
(21) Application number: 20215152.8
(22) Date of filing: 17.12.2020
(51) Int. Cl.: H02J 7/00, H02J 7/36

(54) **ARCHITECTURE OF A HIGH CURRENT BALANCING SYSTEM FOR BATTERIES**

(30) Priority: 19.12.2019 IT 201900024883
(71) Applicant: Flash Battery S.r.l., 42049 Sant'Ilario d'Enza, Reggio Emilia (IT)
(72) Inventor: PASTORELLI, Alan, 42049 SANT'ILARIO D'ENZA REGGIO EMILIA (IT); RIGHI, Marco, 42049 SANT'ILARIO D'ENZA REGGIO EMILIA (IT)
(74) Representative: Feltrinelli, Secondo Andrea

(57) **Abstract**

The present invention relates to a utility power supply unit (1) including at least one battery (2) having two or more cells (4) and a Battery Management System or BMS (8).

## Description

### TECHNICAL FIELD OF THE INVENTION

The present invention relates to a specific construction architecture of a high-current balancing system for the cells of one or more batteries, which can be preferably used in the technical field of lithium-ion batteries.

### STATE OF THE PRIOR ART

The state of the art as regards the methodologies and architectures for balancing the cells of a battery, in particular in that of lithium-ion batteries, generally has two diametrically opposite solutions.

The first involves the use of architectures in which the Battery Management System or BMS (which will be discussed later) is directly connected to the individual cells. However, with this solution the performances are very limited for the power limits of the realization of the BMS system and for the complexity of the connections.

The second instead involves the use of more complex architecture that use control and balancing elements applied to each individual cell. However, performance is directly linked to the power/complexity of the solution adopted, with high costs and dimensions to achieve good performance.

It is clear that the first solution has a limit in the balancing power, while the second solution requires a considerably higher cost in order to obtain higher performance.

The balancing activity is typically performed during the completion of the charging phase, since in this state the energy of the battery charger is available. However, in other solutions it is possible to perform the balancing activity even in the discharge phase even if it is less advantageous from an energy point of view.

In any case, the techniques provided in the state of the art generally provide that in this phase, the charging current is reduced according to the charge level of the individual cells. However, with cells with charge levels very different from the others, the entire charging phase is limited, reaching 100% for some cells only. This results in a final charge level of all the cells which is not homogeneous. This procedure, protracted for a long time, causes a decrease in the life span and total efficiency of the battery.

Clearly, the balancing system of the cells in batteries, preferably lithium, plays a very important role as it affects the performance and duration of the battery life. The higher the efficiency and the balancing times, the better the performance and battery life will be.

### OBJECTS OF THE INVENTION

The object of the present invention is therefore to improve the state of the art in the field of balancing the cells of a battery, preferably a lithium ion battery.

Another object of the present invention is to provide an electric power supply unit for utilities or a hardware architecture for balancing the cells of a battery capable of achieving high performance by minimizing the charging time by optimizing the balance.

Another object of the present invention is to provide a utility electrical power supply unit or a hardware architecture for balancing the cells of a battery that allows an advantageous cost/performance ratio that increases with the increase in the number of cells to be found in the battery.

A further object of the present invention is providing a method for balancing the cells of a battery which maximizes its overall life.

According to an aspect of the present invention, an electric power supply unit is proposed for balancing the cells of a battery according to claim 1.

According to another aspect of the present invention, a method for balancing the cells of a battery according to claim 17 is proposed.

The dependent claims refer to preferred and advantageous embodiments of the invention.

### BRIEF DESCRIPTION OF THE DRAWINGS

Further aspects and advantages of the present invention will become clearer from the following detailed description of some of its currently preferred embodiments, illustrated purely by way of non-limiting example in the accompanying drawings, in which:

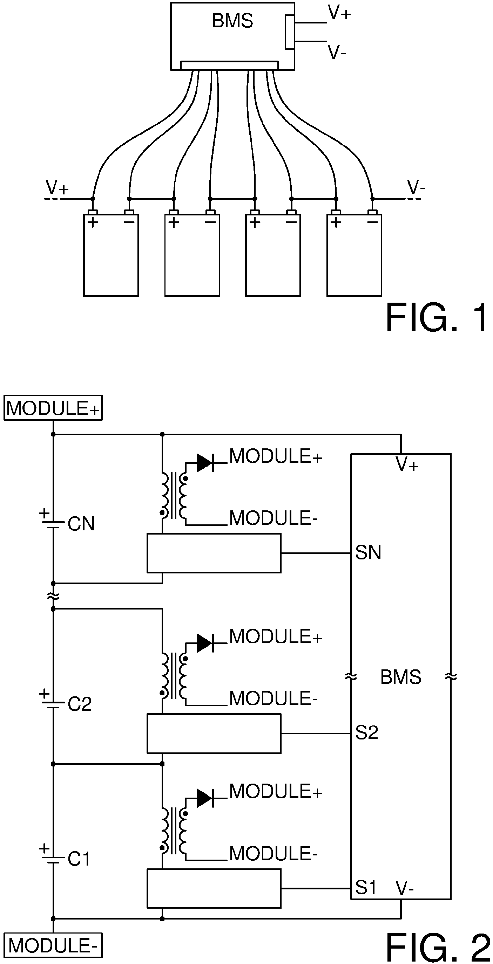

- Figure 1 is a schematic view of a first solution according to the state of the prior art;
- Figure 2 is a schematic view of a second solution in accordance with the state of the prior art;

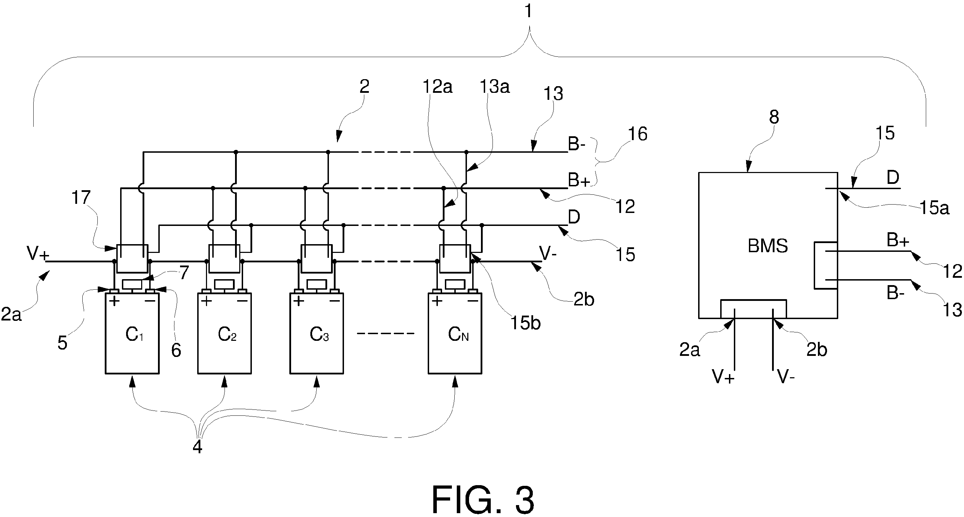

- Figure 3 is a schematic view of an embodiment of a power supply unit according to the present invention;

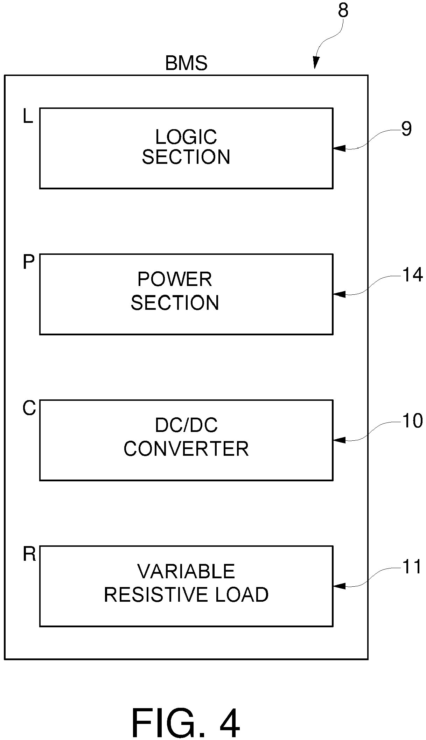

- Figure 4 is a schematic view of a Battery Management System (BMS) for a unit in accordance with the present invention;

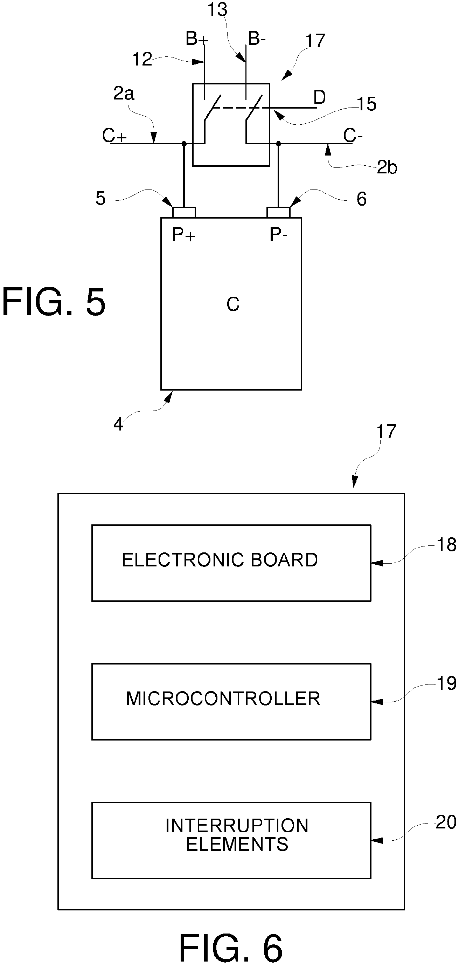

- Figure 5 is a schematic view of a switching element for a unit according to the present invention;
- Figure 6 is a schematic view of a switching element for a unit according to the present invention.

### EMBODIMENTS OF THE INVENTION

With reference to the attached drawings, according to a preferred embodiment an electric power supply unit 1 for users, for example special electric vehicles, such as automatic guided vehicles and industrial machines, comprises at least a battery 2 made of lithium or with a different chemistry, having an end for supplying electric current from the unit to the outside or main positive pole 2a and a main negative pole 2b.

According to a preferred non-limiting embodiment, the battery has two or more cells 4, for example sixteen, thirty, or more each comprising two secondary poles, for example a positive pole 5 and a negative pole 6, a sensor 7 of the state of charge of each cell 4 used to monitor by measuring parameters, such as for example temperature and voltage parameters, the state of charge and general operating conditions of each cell.

The unit 1 then includes a Battery Management System or BMS 8, whose main functions are one or more of the following: monitoring the total current and voltage of the battery, monitoring the voltage and temperature levels of the individual cells, calculation of the state of charge and the state of health of the battery, the management of battery recharging and communications with the system to which the battery is connected, protection from Over/Under-current and from Over/Under-voltage and the active and/or passive balancing functions of the cells.

The BMS 8 can comprise a logic section 9, whose main function is to integrate all the elements to manage the balancing activities with the aim of minimizing the completion times of the charge of the cells 4, allowing to act as long as possible at the maximum permitted current.

At least one element for active balancing 10 and/or passive 11 can be provided in the BMS, preferably a first element for active balancing 10 and a second element for passive balancing 11 separated from the first element for active balancing 10.

This embodiment with at least one element for active balancing 10 and/or passive 11 integrated within the BMS 8 itself allows not only a smaller space requirement, but also an improved compactness of the unit 1, for example in the case where one wants to add further cells 4 and/or modules of cells 4.

In other preferred embodiments, the elements for active 10 and passive 11 balancing can be one integrated in the BMS and the other not integrated therein and viceversa or even both not integrated in the BMS.

According to a preferred embodiment, the active balancing element 10 is a DC/DC converter whose function is to absorb energy from the total voltage of the battery 2 and deliver it through a charge line 12 (which will be better described later) in cells 4.

The element for passive balancing 11 can instead be an element designed to absorb energy from the single cell through the charge/discharge line 12, 13 and to dissipate it in heat, for example a variable resistive load.

The BMS can then include at least one power section 14 integrated through the electronics in the BMS itself intended to act as a control interface of the logic section 9 to drive at least one element for the active 10 and/or passive 11 balancing of the cells 4, so as to adjust such element according to the balancing needs of the cells.

It should be noted that in other preferred embodiments the power section may not even be integrated directly into the BMS, but it could still be present in the unit 1.

Preferably, the unit 1 further comprises a data/instruction communication line 15 extending between the BMS 8 and each cell 4, one of the functions of which is to communicate the charge level of the cells 4 to the BMS 8.

The unit 1 can then include a balancing bus 16 comprising a charge line 12 and a discharge line 13 designed to put in electrical communication an element for active balancing 10 and/or passive 11 and each of the cells 4 so as to allow the charge and/or discharge of the latter.

In another embodiment it would be possible to have only one charge/discharge line operating bidirectionally.

According to the non-limiting embodiment illustrated in the figures, the charge/discharge line 12, 13, if desired both the charge line 12 and the discharge line 13 (if two separate lines are provided) comprises a number of connectors 12a, 13a towards and from each cell 4 equal to the number of cells 4 present in the battery 3.

In this regard, if there are four, six, eight cells 4, preferably four, six, eight, respectively connectors from the charge/discharge line 12 to each cell 4 and four, six, eight, respectively connectors from each cell 4 to the charge/discharge line 13, will be provided. Naturally, with a charge line 12 separated from the discharge line 13, four, six, eight connectors 12a from the charge line 12 to each cell and four, six, eight connectors 13a from each cell 4 to the discharge line 13 will be provided.

Preferably, these connectors 12a, 13a are each intercepted by a respective switching device 17 designed to open/close the current passage through a related connector or related connectors 12a, 13a being the BMS or a component thereof designed to control the plurality of switching devices 17 and the at least one element for active and/or passive balancing of the cells, so as to activate/deactivate the power supply or the discharge of the cells 4 by the at least one element for active balancing 10 and/or passive 11 of the cells 4 as a function of the charge data received for the cells, through the data/instruction communication line 15, from the sensor 7 of the state or level of charge of each cell.

In another embodiment it would be possible to have only two or more main connectors, each intercepted by a respective switching device, which each serve two or more secondary connectors each leading into a respective cell. Basically, according to this variant, there would be two or more cells served by a respective main connector of the charge/discharge line. In this case, a respective switching device 17 could be provided for each main connector and not for the secondary connectors or at least not for all the connectors.

Clearly, combinations of the solutions indicated above are also possible, also depending on the presence of the same two-dimensional charge/discharge line or a charge line separated from a discharge line.

The charge/discharge line 12, 13 as well as any connectors are made by means of a connector element or wire, for example made of a material chosen from the group consisting of copper or the like.

The switching device(s) 17 can be both mechanical and electronic, but preferably of the electromechanical type since this type of switching device allows, in addition to the effective management of high currents, for example up to at 30 A, also good electrical insulation between the branch lines as well as a significant containment of the overall costs of unit 1.

According to a non-limiting embodiment, at least one switching device 17 comprises an electronic board 18, on which a microcontroller 19 is present.

In addition or alternatively to this, at least one switching device 17 includes an element 20 for stopping the electrical connection between the at least one charge/discharge line 12, 13 and a respective cell 4 based on the instructions that the BMS 8 by means of the data/instruction communication line 15 provides to the switching device 17, if desired, with a microcontroller 19 thereof, if such component is provided.

There are no technical construction specifications on the type of switching device to be used, the only constraints are that said device must be highly reliable, for example it must be able to guarantee at least 10⁷ commutations, and given the large number of switches to be performed it must have a low resistance, for example lower than or up to a maximum of about 8 mΩ, if desired between 4 and 8 mΩ or about 6 mΩ, to be able to limit energy losses during the passage of current. Advantageously, the switching device(s) then have a breakdown voltage higher than 150V.

Furthermore, the type of the switching device(s) must be such as to guarantee in the open state the tolerance of the total battery voltage, i.e. the sum of the voltages acting on each of the cells 4 of the battery 2; the switching devices switch in moments in which the bus is isolated and therefore with zero load, so they must not be oversized to switch a power equal to the battery voltage for the working current.

For this reason, any device that has the aforementioned constraints, although constructively different from that of the present preferred embodiment, falls within the scope of the following claims.

According to a preferred embodiment, the data/instruction communication line 15 comprises a second bi-directional communication bus having a first end 15a operatively connected to the BMS 8 and a plurality of second ends 15b, preferably equal to the number of communication switching devices 17 present and operationally connected with these switching devices 17.

In accordance with a preferred embodiment, the BMS 8 or a component thereof, for example the logic section 9 of the BMS 8, is designed to control the plurality of switching devices 17 so as to close a respective interruption element 20 to allow the passage of electric current between a single cell 4 or a single main branch and at least one element for the active 10 and/or passive 11 balancing of the cells 4, while the passage of current between the other cells 4 or the other main connectors and the element for the active 10 and/or passive 11 balancing of the cells is interrupted or prevented.

The control of the plurality of switching devices 17 can take place by means of commands, processed by the logic section of the BMS 8 and sent to the microcontroller 19 through the data/instruction communication line 15, used to command the closing/opening of the interruption elements of the devices switch 17.

In the ideal situation in which all the cells 4 do not need a balancing, all the interruption elements 20 are open. If a cell 4 need to be active/passive balanced, the respective interruption element 20 is closed and once the balancing is finished, the interruption element 20 is opened, then proceeding in the same way for the other cells 4.

In other embodiments it is possible to have one or more switching devices 17 connected to more than one cell 4, so that two or more cells connected to each other in parallel can be charged or discharged together. In this case the parallel connection between two or more cells is called module.

The balancing of the cells 4 of a battery 2 according to the present invention preferably provides that the balancing activity is performed on a single element or cell 4 at a time, to maximize the effectiveness of the action. However, for example each interval of time between 5 and 40 seconds, if desired every 10 seconds, the conditions of all the cells 4 present in the battery 2 can be re-evaluated by a logic section 9 for example present or integrated in the BMS 8 on the basis of the values measured by the sensor for the state of charge of the cell.

In this way, in cases where only one cell 4 needs balancing, it will continue to act on it until it is aligned (in terms of charge) to the others, while in the case in which more cells 4 have energy levels different than the others or in any case too low, it will act on each of them, preferably alternately, trying to obtain a homogeneous realignment of all the cells 4 present in the battery 2. Therefore acting in a timely manner on the cells 4 misaligned, by relying on the element for active balancing 10 of the cell or cells 4 where active balancing is needed or the element for passive balancing 11 of the cell or cells 4 where passive balancing is needed, it is possible to obtain the increase of the overall charge level of the battery 2 in a homogeneous way, thus improving its lifespan and efficiency.

Clearly, depending on the structure of the charge/discharge line 12, 13, with particular reference to the presence or absence of main or secondary connectors, it would also be possible or necessary to manage the charge/discharge of two or more cells together and simultaneously.

According to a preferred embodiment, it is also possible to have two or more balancing buses, each electrically isolated from the other, each controlled by a BMS.

According to a preferred embodiment, the method for carrying out cell balancing provides for detecting by means of the sensor or sensors 7 the state or level of charge of each cell 4 and sending data regarding the state or level of charge of each cell to the BMS 8 through the data/instruction communication line 15.

Subsequently, the data is processed through the logic section 9, for example integrated in the BMS 8 and subsequently, if the BMS 8 deems it appropriate to charge or discharge or balance at least one cell 4 in an active or passive way, at least one command signal will be transmitted processed by the BMS 8 through the data/instruction communication line 15 so as to conveniently command at least one element for the active 10 and/or passive 11 balancing of the cells 4 and one or more switching devices 17 in such a way as to allow charging or discharging or balancing the cell 4 to be charged or discharged.

Subsequently, if at least one cell should be balanced, the method for balancing two or more cells of a battery previously or currently used in a power supply unit according to the present invention provides for closing the interruption element of the only switching device 17 intercepting the branch line leading into cell 4 to be charged or discharged or to be subjected to an active/passive balancing and to open or keep the other switching devices 17 open.

The balancing activity is transparent with respect to the normal operation of the battery and the balancing bus is electrically isolated from the total battery voltage since, from the moment in which one acts on a single cell, there is no electrical potential that causes flow energy to other cells.

Then, through the element or elements for the active balancing 10 of the cells 4, the amount of energy necessary to effect the active balancing or charge of the cell 4 to be charged will be absorbed, making the energy flow through the charge/discharge line 12 corresponding to the active balancing or charging directly in this cell, or the amount of energy necessary for the passive balancing or discharging of the cell to be discharged will be taken from the cell 4 itself by making the energy flow through the charge/discharge line 13 corresponding to the passive balancing of the cell directly into the passive battery balancing element 11.

Subsequently it would be necessary to open, after having carried out the active/passive balancing of the cell 4, the respective switching device 17 which was previously closed, by means of a command processed by the logic section of the BMS 8 and carry out the previous steps in the order described by iterating the method on all other battery cells to charge or discharge or balance.

It has thus been seen how the invention achieves the proposed objects.

In this way it has been seen how the invention just described is able to provide for balancing at high currents, for example up to 30 A, of lithium batteries, an advantageous architecture from the point of view of the price/performance ratio which allows, by carrying out the balancing activity on one cell at a time by means of the active and passive balancing elements integrated directly into the BMS, a homogeneous increase in the overall charge level of the battery which leads to a maximization of the charging time and the life span of the battery itself.

Furthermore, the present invention allows to obtain a high level of scalability, since, if it is desired to increase the number of cells or cell modules of the unit 1, it would be sufficient to extend the balancing bus 16 together with the data/instruction communication line 15 and connect to it the desired number of cells or cell modules with the respective associated switching devices 17, without any intervention on the BMS 8 which thus remains unique even for a greater number of cells 4.

The invention thus conceived is susceptible of numerous modifications and variations, all falling within the scope of the inventive concept.

In practice, the materials used, as well as the contingent shapes and dimensions, may be any according to requirements without thereby departing from the scope of the following claims.

## Claims

1. Power supply unit for users (1) including at least one battery (2) comprising a main positive pole (2a) and a main negative pole (2b), said at least one battery (2) having two or more cells (4) each comprising at least two secondary poles (5, 6), at least one sensor (7) for detecting the state of charge of each cell (4), a Battery Management System or BMS (8), said BMS having integrated therein at least one logic section (9), at least one element for the active balancing (10) of the cells and/or at least one element for passive balancing (11) of the cells, said unit further including at least one line (15) for communicating data/instructions between said BMS (8) and each of said two or more cells (4) designed to communicate charge values of said cells to said BMS (8), and at least one balancing bus (16) comprising at least one charge/discharge line (12, 13) designed to place said at least one element (10, 11) for active and/or passive balancing and each of said cells (4) in electrical communication so as to allow the charging and/or discharging thereof, said unit (1) further comprising two or more switching devices (17), said at least one charge/discharge line (12, 13) comprising connectors (12a, 13a) to and from each cell and wherein at least two connectors (12a, 13a) are each intercepted by a respective switching device (17) designed to open/close the current flow through a respective connector or connectors, said BMS (8) or a component thereof being designed to control said plurality of switching devices (17) and said at least one element (10, 11) for the active and/or passive balancing of the cells (4), so as to activate/deactivate the supply or discharge of said cells (4) by means of said at least one element (10, 11) for the active and/or passive balancing of the cells (4) as a function of the charge data of said cells received, by means of said at least one data/instructions communication line (15), from said at least one sensor (7) for detecting the state or level of charge of each cell (4).

2. Power supply unit according to claim 1, wherein said at least one element (10, 11) for the active and/or passive balancing of the cells (4) comprises at least one element (10) for the active balancing or charging of the cells (4) and at least one element (11) for the passive balancing or discharging of the cells (4) and wherein said charge/discharge line (12, 13) comprises at least one first electric charge line (12) designed to place said at least one active balancing element (10) and each of said cells (4) in electrical communication; and at least one second electric discharge line (13) designed to place said at least one passive balancing element (11) and each of said cells (4) in electrical communication.

3. Power supply unit according to claim 1 or 2, comprising at least one power section (14) intended to act as an interface for controlling said at least one logic section (9) to drive said at least one element (10, 11) for the active and/or passive balancing of the cells (4), so as to adjust it as a function of the balancing needs of said two or more cells.

4. Unit according to claim 3, wherein said at least one power section (14) is integrated into said BMS (8).

5. Power supply unit according to claim 1, 2, 3 or 4, wherein said at least one element (10) for the active balancing of said two or more cells (4) comprises a DC/DC converter (L).

6. Power supply unit according to claim 5, wherein said DC/DC converter is designed to absorb energy from the total voltage of the battery (2) and to delivery it to the single cell through at least said at least one charge/discharge line (12, 13).

7. Power supply unit according to any one of the preceding claims, wherein said at least one passive balancing element (11) comprises an element capable of absorbing energy from the single cell.

8. Power supply unit according to claim 7, wherein the element designated to absorb energy from the single cell through said at least one charge/discharge line (12, 13) and dissipating it in heat consists of a variable resistive load (R).

9. Power supply unit according to any one of the preceding claims, wherein said plurality of switching devices (17) are controlled by said BMS (8) by means of said at least one data/instructions communication line (15).

10. Power supply unit according to any one of the preceding claims, wherein some or all of said switching devices (17) comprise an electronic board (18), on which there is a microcontroller (19), and an interruption or consent element (20) for the electrical connection between said at least one charge/discharge line (12, 13) and a respective cell (4) based on the instructions that said BMS (8) provides to the microcontroller (19) by means of said at least one data/instruction communication line (15).

11. Power supply unit according to any one of the preceding claims, wherein one or more of said switching devices (17) integrates a logic part therein for measuring the temperature and voltage parameters of the respective cell (4).

12. Power supply unit according to any one of the preceding claims, wherein said plurality of switching devices (17) are electromechanical switching devices.

13. Power supply unit according to any one of the preceding claims, wherein said at least one data/instructions communication line (15) comprises a bidirectional communication bus having at least two ends (15a, 15b), a first end (15a) operatively connected with the BMS (8), while the other or second end (15b) is operatively connected with one or more of said switching devices (17).

14. Power supply unit according to any one of the preceding claims, wherein said at least one element for the active (10) balancing of the cells (4) is separated from said at least one element for passive (11) balancing of the cells (4).

15. Power supply unit according to any one of the preceding claims, wherein said BMS (8) or a component thereof is designed to control said plurality of switching devices (17) so as to alternately open the flow of electric current between a single cell and said at least one element (10, 11) for the active and/or passive balancing of the cells (4), while the current flow between the other cells and said at least one element (10, 11) for the active and/or passive balancing of the cells (4) is interrupted or prevented.

16. Power supply unit according to any one of the preceding claims, wherein each switching device of said plurality of switching devices (17) has a resistance value lower than 8 mΩ and a breakdown voltage higher than 150V.

17. Power supply unit according to any one of the preceding claims, wherein said BMS (8) can be used for balancing said two or more cells (4) up to current values equal to about 30 A.

18. Battery Management System or BMS (8) for a power supply unit for users (1), said BMS having integrated therein at least one logic section (9), at least one element (10) for the active balancing of the cells (4) and at least one element (11) for the passive balancing of the cells (4) separated from said at least one element (10) for the active balancing of the cells (4).

19. BMS according to claim 18, comprising at least one power section (14) designated to act as an interface for controlling said at least one logic section for driving said at least one element (10) for the active balancing of the cells (4) and said at least one element (11) for the passive balancing, so as to adjust them as a function of the balancing needs of cells to be served.

20. Method for balancing two or more cells of a battery (2) previously or currently used in a power supply unit (1) according to any one of claims 1 to 17, comprising the steps of:
- detecting, by means of said at least one sensor (7), the state or level of charge of each cell,
- sending the data on the state or level of charge of each cell to the BMS (8) through said at least data/instructions communication line (15);
- processing said data through the logic section (9) integrated in the BMS,
wherein, if the BMS deems it appropriate to charge or discharge or to actively or passively balance at least one cell (4), transmitting at least one control signal processed by said BMS (8) by means of said at least one data/instructions communication line (15) so as to suitably control said at least one element (10, 11) for the active and/or passive balancing of the cells (4) and at least one switching device (17) so as to allow the charging or discharging or balancing of said at least one cell to be charged or discharged.

21. Method according to claim 20, comprising, in case of need of balancing at least one cell, the steps of
- closing only the switching device (17) intercepting the branch line terminating in a cell (4) to be charged or discharged or to be subjected to an active or passive balancing and opening or keeping the other switching devices (17) open;
- absorbing, by means of the at least one element (10, 11) for the active balancing of the cells (4), the amount of energy required for carrying out the active balancing or charging of said cell to be charged and making said power to flow through the charge/discharge line corresponding to the active balancing or charging directly in said cell, or drawing the amount of energy required for the passive balancing or discharging said cell (4) to be discharged from said cell (4) and making said energy to flow through the charge/discharge line (12, 13) corresponding to the passive balancing of the cell directly in the element (11) for the passive balancing of the battery (2);
- opening, after performing the active or passive balancing of at least one cell, the respective switching device which was previously closed, by means of a command processed by the logic section (9) of the BMS (8),
- performing the previous steps in the outlined order by iterating the method on all other cells of the battery (2) to be charged or discharged or balanced.

22. Method according to claim 20 or 21, wherein the condition of each cell is re-assessed at each time interval between 5 and 40 seconds, for example every 10 seconds and wherein if one or more cells have different power levels with respect to the others, action will be alternately taken on each one of them, trying to achieve a homogeneous realignment of the state of charge of the entire battery.
